# EUROPEAN PATENT APPLICATION

(11) **EP 1 806 786 A1**
(43) Date of publication of application: **11.07.2007**
(21) Application number: 06713100.3
(22) Date of filing: 06.02.2006
(51) Int. Cl.: H01L 29/06, G08B 25/00, H04N 7/18, H04Q 9/00, H04L 29/06

(54) **MONITORING CAMERA DEVICE, MONITORING SYSTEM USING THE SAME, AND MONITORING IMAGE TRANSMISSION METHOD**

(30) Priority: 09.02.2005 JP 2005032554
(71) Applicant: MATSUSHITA ELECTRIC INDUSTRIAL CO., LTD., Osaka 571-8501 (JP)
(72) Inventor: MATSUDA, Keisuke, c/o Matsushita Electric Ind. Co., Ltd., Osaka-shi, Osaka 540-6319 (JP); HIGUCHI, Manabu, c/o Matsushita Electric Ind. Co., Ltd., Osaka-shi, Osaka 540-6319 (JP); OGINO, Ryoji, c/o Matsushita Electric Ind. Co., Ltd., Osaka-shi, Osaka 540-6319 (JP)
(74) Representative: Grünecker, Kinkeldey, Stockmair & Schwanhäusser Anwaltssozietät
(86) International application number: PCT/JP2006/301957
(87) International publication number: WO 2006/085500

(57) **Abstract**

The invention includes an imaging unit (11) for taking the image of a subject as the object of monitoring, a moving image extracting unit (12) for extracting image data of each frame in every specific frame period from this image data, a motion image encoder (13) for generating motion image data by compressing and coding the extracted image data, a change detecting unit (17) for issuing a change detection signal showing a change in the subject, and a transport processing unit (19) for processing data transport by changing over at least two types of communication protocols depending on the change detection signal. The transport processing unit (19) transports the motion image data to a monitor terminal device (40) through a network (30) according to connection-less type communication protocol when the change detection signal shows no change, or according to connection type communication protocol when showing presence of change. Therefore, the invention presents a monitor camera device and a monitoring system capable of sending out images necessary for judging presence or absence of abnormality in the monitoring object adequately.

## Description

### TECHNICAL FIELD

The invention relates to a monitor camera device and a monitoring system using the same for monitoring a remote place by using a subject image taken by a monitor camera or the like, and more particularly to a monitoring system for transporting the image data of the taken subject image to a remote place through network, and a monitoring camera device and a monitor image transport method used in this system.

### BACKGROUND ART

Various technologies have been proposed so far about monitor camera device and monitoring system. In particular, recently, new technologies have been proposed, including the monitoring system for monitoring by transporting the image data by a monitor camera installed at a monitoring location to a remote monitor unit by using the Internet or other network, and the monitor camera device used in such monitoring system. Such technologies are disclosed, for example, in Japanese Patent Application Laid-Open No. 2001-189932.

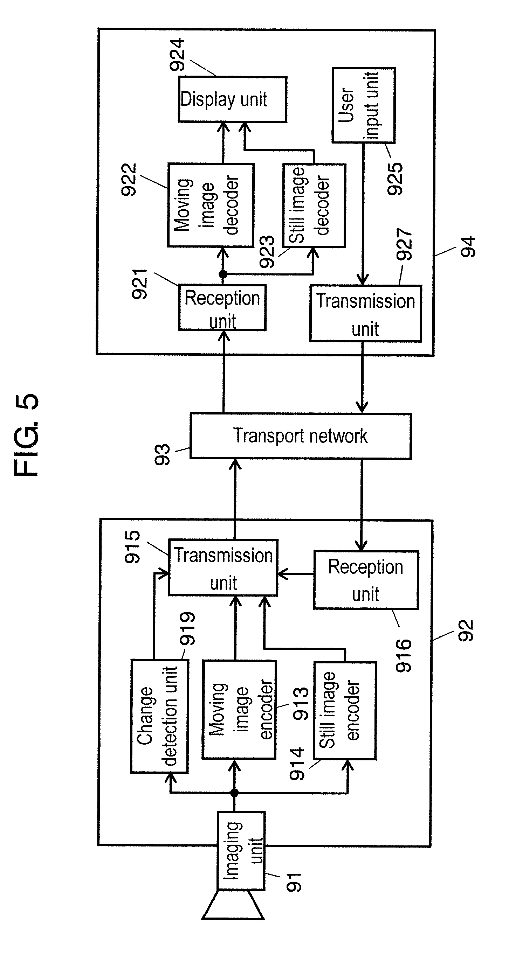

Fig. 5 is a block diagram of an example of monitoring system using a conventional monitor camera device. In a monitor camera device 92, the subject image of a monitoring object taken by an imaging unit 91 is compressed and coded. The monitor camera device 92 transports the compressed and coded image data to a monitoring device 94 by way of transport network 93 such as the Internet.

The imaging unit 91 takes the subject, and supplies the image data of the taken subject to each encoder provided in the monitor camera device 92. A moving image encoder 913 compresses and codes the image data supplied from the imaging unit 91 according to a moving image compressing and coding method, and generates the compressed and coded image data of moving image.

One of the digital technologies for compressing and coding the image data of moving image is an inter-frame compressing and coding system for compressing and coding by using image data between adjacent frames to be compressed and coded by using the image data in one frame. The inter-frame compressing and coding system is proposed in various image coding standards, including MPEG (Moving Picture Image Coding Experts Group) 2 System, and MPEG4 System, which are realized in digital television broadcast, or distribution of moving images via the Internet.

A still image encoder 914 compresses and codes the image data supplied from the imaging unit 91 according to a still image compressing and coding system, and generates still image data as compressed and coded image data of still image. Further, the still image encoder 914 generates still image data in a later period than the period for generating moving image data by the moving image encoder 913, and generates still image data of higher resolution than the moving image data.

One of the digital technologies for compressing and coding the image data of such still image is an inter-frame compressing and coding system for compressing and coding by using image data in one frame. The inter-frame compressing and coding system is proposed in various image coding standards, including JPEG (Joint Photographic Image Coding Experts Group) System, and it is realized in recording of taken image data of digital camera, or distribution of still images via the Internet.

A transmission unit 915 controls to transmit compressed and coded moving image data and still image data to the monitoring device 94 through transport network 93 in individual packet formats. A reception unit 916 controls to receive the data transmitted from the monitoring device 94 through transport network 93, and transfers the received data to the transmission unit 915. The transmission unit 915 controls to select which one should be transmitted, moving image data or still image data, on the basis of the received data from the reception unit 916.

A change detection unit 919 detects, for example, time changes of each block of an image divided into plural blocks. When the number of changed blocks exceeds a specified rate, the change detection unit 919 instructs the till image encoder 914 to generate still image data at that moment. The change detection unit 919 further instructs the transmission unit 915 to transmit this still image data to the monitoring device 94.

The inside of the monitoring device 94 includes a reception unit 921, a moving image decoder 922, a still image decoder 923, a display unit 924, a user input unit 925, and a transmission unit 927.

The reception unit 921 receives data from the monitor camera device 92. The moving image decoder 922 extracts moving image data from the data received in the reception unit 921, and converts into a video signal. The still image decoder 923 extracts still image data from the data received in the reception unit 921, and converts into a video signal. The video signals generated by the moving image decoder 922 and still image decoder 923 are reproduced in the display unit 924. The user input unit 925 receives an instruction from the user, and notices the information about the received instruction to the transmission unit 927. The transmission unit 927 notices the noticed information about the instruction from the user to the reception unit 916 of the monitor camera device 92 through the transport network 93.

In such conventional monitoring system, while transporting moving image data, if a change occurs in the object of monitoring, the still image data of the monitoring object at this moment is transported. Accordingly, the user can display this still image data as required. The user no longer has to observe the display unit 924 continuously, and the burden is lessened, and overlooking of change in the object of monitoring can be reduced.

In the case of such monitoring system using the Internet or other network, the transport network for transporting data is often shared with other data communication lines or shared by plural monitor device cameras. As a result, the communication circuit is complicated, and transport capacity may not be constant depending on the degree of complicatedness. If the transport load is heavy, the transport may be delayed, or packet loss or other problems may occur.

To solve such problems in monitoring system by transport load, hitherto, it has been proposed to lower the effects of transport load by changing the format of transporting the monitoring images on the basis of the complicated state of network. In one of such proposals, for example, a monitoring image sending device such as monitor camera device 92 is provided with measuring means for measuring the load state of the network, and the moving image data is sent out when the network load is light as a result of measurement, or still image data is sent out when the network is overloaded. In such monitoring system, while the network is less crowded, the moving image can be monitored in a smooth motion, and if the network is heavily crowded, a still picture of high quality can be monitored. Such technology is disclosed in Japanese Patent Application Laid-Open No. 2003-163914.

Generally, when transporting image data by using the Internet or other network, a different transport protocol is selected depending on the importance or type of data to be transmitted. For example, in the case of still image data distribution by the Internet, usually, real-time performance of still image data high not highly demanded, and the still image data once received at the reception side is accumulated and is then reproduced, which is known as download system.

To realize such download system, usually, the connection type communication protocol is employed, in which establishment of connection is required between mutual communications in data transport. In such connection type communication protocol, the reliability of data transport is most important, and the protocol includes two-way confirmation response procedure and resend processing for transport error. Hence, if the network is crowded, the sent data is securely transported to the reception side. However, since such complicated procedure or process is needed, a time delay may occur until the sent data is received at the reception side. An example of such connection type communication protocol is TCP (transmission control protocol), which is standardized for realizing reliable connection type communication in transport layer.

On the other hand, in moving image data distribution on the Internet, usually, real-time performance is demanded in moving image, and a so-called streaming system is employed, in which moving image is reproduced in correct time interval at the reception side.

To realize such streaming system, usually, connection-less type communication protocol is employed, in which it is not required to establish connection between mutual communications in data transport. In such connection-less type communication protocol, real-time performance of data transport is most important, and unlike the connection type communication protocol, it does not include confirmation response procedure or resend processing, and high speed transport process is possible. As mentioned above, however, if the network is heavily crowded, packet loss may occur in the network, and the image may be disturbed at the reception side or the motion of the moving image may be stopped, or other problems may occur. An example of such connection-less type communication protocol is UDP (user datagram protocol), which is proposed for realizing connection-less type communication of high speed transport in transport layer, and other example is RTP (real-time transport protocol) standardized for data transport of high real-time performance such as moving image specified in application layer.

As explained herein, in the case of transport of image data by using network, usually, in the case of still image data, the connection type communication protocol such as TCP is employed because the reliability of data transport is most important. In the case of moving image data, the real-time performance of data transport is most important, and hence the connection-less type communication protocol is selected, such as UDP or RTP An example of prior art in such moving image transport is proposed as a technology relating to an image transport system for enhancing the transport efficiency by adequately changing over between transport protocol based on UDP and transport protocol based on TCP, depending on the quality status of network. Such technology is disclosed in Japanese Patent Application Laid-Open No. H11-313330.

However, in the case of monitoring system for transporting still image data, together with moving image data, depending on the changes of the image of the monitoring object, as mentioned above, if such network is crowded and overloaded, troubles, such as disturbance of moving image being monitored or stop of motion, may occur at the reception side such as monitoring device 94. In particular, if the monitoring object is changed in overloaded state of network, the moving image may not be displayed smoothly. It is hence hard to observe the changes of the monitoring object, and abnormality of the monitoring object may be overlooked, or it may be hard to judge if the change of the subject may lead to abnormality of the monitoring object or not. Besides, display of still image by still image data sent out by detecting changes in the monitoring object is an intermittent display if high in resolution. It is accordingly difficult to observe the changes of the monitoring object, and to judge if the monitoring is taking place in the monitoring object or not.

As a more specific example of the problem in such conventional monitoring system, an incidence of a person passing before the monitor camera device is explained below. First, by passing of a person, a change occurs in the subject being monitored, and in the monitoring device, a still image of a person is displayed, together with the moving image being monitored. As a result, the observer is easier to object the change occurring in the monitoring object. At the same time, the observer can recognize the behavior of the person by the moving image transported simultaneously, and it ca be judged if the person is behaving theft or any other criminal deed or not. However, due to overload of the network, if the moving image of the person being monitored is disturbed, or the motion is stopped, it is hard to recognize the behavior of the person and it is hard to judge if the behavior of the person is leading to theft or criminal action or not. Display of still image is an intermittent display if high in resolution, and it may be possible to overlook a moment of theft or criminal action.

In the case of distribution of moving image such as movie and television by the Internet, as mentioned above, real-time performance is required. By contrast, in the case of monitoring system mainly intended to monitor, the real-time performance may be ignored somewhat, but it is important to judge clearly the presence or absence of abnormality of the monitoring object. As in the case of conventional monitoring system, however, if defect of necessary image occurs, the reliability in the important purpose of monitoring may be lowered.

Also in the case of monitoring system for adaptively transporting the moving image data and still image data of the monitoring object depending on the crowded state of the network, if abnormality occurs in the monitoring object while the network is overloaded, still image data is transported. The display is an intermittent image of the object, and it is hard to recognize the change in the object, and it is hard to judge if abnormality has occurred in the object or not. By increasing the number of frames in the still image to be transported, it may be easier to recognize the change in the object. Generally, in the still image data of JPEG system or the like, the quantity of data per frame is larger as compared with moving image data, and the load is much increased in the overloaded network, and there was a limit in increasing the number of frames.

If a person passes before the monitor camera device as in the example given above, the observer can recognize the behavior of the person by the usual moving image transported, and can judge if the person attempts theft or other criminal deed or not. But if the network is overloaded, still image is transported instead of moving image. Since the still image is an intermittent display, it may be possible to overlook theft or other criminal deed.

Further in the case of monitoring system for adaptively changing over the transport protocol, UDP or TCP, depending on the quality state of the network, if the network is overloaded but there is no change in the object of monitoring, the image is transported by TCP including the two-way confirmation response procedure or resend processing for transport error. As a result, the image data of normal image having no change or abnormality is transported by the protocol of high quality, and the quantity of transport data is increased, and the load of the network is increased.

When a person passes before the monitor camera device as in the example given above, the observer can recognize the behavior of the person by the moving image transported regardless of the crowded state of thee network, and can judge if the person attempts theft or other criminal deed or not. But if no one passes before the monitor camera device, that is, if no abnormality is recognized, if the network is overloaded, image of no particular importance is transported by the protocol of high quality. As a result, the quantity of transport data is increased.

### SUMMARY OF THE INVENTION

The invention is devised to solve the problems of the prior art, and it is hence an object thereof to present a monitor camera device and a monitoring system using the same capable of suppressing load to the network regardless of loaded state of the network and sending out image necessary for judging abnormality in the object of monitoring adequately.

To solve the problems, the monitor camera device of the invention is a monitor camera device of a monitoring system for transporting the taken image data for monitoring to a monitor terminal device through a communication network, and monitoring a remote place, including an imaging unit for taking the image of a subject as the object of monitoring, and generating the image data of the taken subject in a specific frame period, a moving image extracting unit for extracting image data of each frame in every specific frame period from the image data of specific frame period generated in the imaging unit, a motion image encoder for generating motion image data as compressed and coded mage data by compressing and coding the image data extracted in the moving image extracting unit, according to still image compressing and coding system, or moving image compressing and coding system, a change detecting unit for detecting a change in the subject on the basis of the image data, and issuing the detected result as a change detection signal, and a transport processing unit for processing data transport by changing over the processing means of transport protocol selectively depending on the change detection signal, for transporting the data to a monitor terminal device through a network, between processing means based on connection type communication protocol requiring establishment of connection between mutual communications and processing means based on connection-less type communication protocol not requiring establishment of connection between mutual communications.

The transport processing means is designed to transport the motion image data generated in the motion image encoder, when the change detection data shows no change, to the monitor terminal device through the network according to connection-less type communication protocol, and to transport the motion image data generated in the motion image encoder, when the change detection data shows presence of change, to the monitor terminal device through the network according to connection type communication protocol.

In such configuration, when there is no change in the subject image of the monitoring object, the monitoring object image data in specific frame period is transported to the monitor terminal device according to connection-less type communication protocol. That is, when transporting the monitor image having no change or abnormality, the data is transported by the protocol not particularly high in quality, and the transport data is not increased and the load to the network is smaller. By contrast, when there is change in the subject image of the monitoring object, the monitoring object image data is transported to the monitor terminal device according to connection type communication protocol. That is, when transporting the monitor image having change, the data is transported by the protocol of high quality regardless of the load state of the network. As a result, if there is possibility of abnormality in the monitoring object, the monitor terminal device is free from problems such as disturbance of image or stop of motion. The image can be observed continuously in every specific frame period, and presence of abnormality in the monitoring object can be judged adequately. Only when the monitoring object is changed, the motion image data is transported by the connection type protocol of high quality. Hence, the data transport quantity per unit time can be saved, and the load to the network is suppressed.

The monitor camera device of the invention further includes a still image extracting unit for extracting image data in an arbitrary frame from the image data in specific frame period generated in the imaging unit, and a still image encoder for compressing and coding the image data extracted in the still image extracting unit according to still image compressing and coding system, and generating still image data as compressed and coded image data, in which the transport processing unit transports the still image data generated in the still image encoder to the monitor network device through the network according to connection type protocol, and transports the motion image data generated in the motion image encoder to the monitor network device through the network according to connection-less type protocol when the change detection data shows no change, or transports the motion image data generated in the motion image encoder to the monitor terminal device through the network according to connection type communication protocol when the change detection data shows presence of change.

In such configuration, in the monitor terminal device, both moving image of motion image data, and still image of still image data or part of still image of high resolution can be displayed and monitored, and precision of monitoring is enhanced. The device also includes processing means of connection type communication protocol for transporting still image data, and this processing means is in operating state, and therefore if there is change in the subject image of the monitoring object, motion image data is transported immediately by changing over from the connection-less type communication protocol to connection type communication protocol. As a result, processing time for changeover of transport protocol process is not needed, and an image involving possibility of abnormality in monitoring object can be transported by suppressing delay.

According to the monitor camera device and monitoring system of the invention, as far as the subject image of monitoring object is free from change, the motion image data corresponding to the subject image of monitoring object is transported by connection-less type communication protocol of lower image quality, and the load to the network is lowered. When there is a change in the subject image of monitoring object, the motion image data is transported by connection type communication protocol of higher image quality regardless of the load state of the network. Hence, the images can be observed continuously in every specific frame period without troubles in the monitor terminal device such as disturbance of image or stop of motion.

Also by the monitor camera device and monitoring system of the invention, in the monitor terminal device, both moving image of motion image data, and still image of still image data are displayed and monitored, and precision of monitoring is enhanced. Therefore if there is change in the subject image of the monitoring object, by using the processing means of connection type communication protocol for transporting the still image data, immediately, the connection-less type communication protocol is changed over to the connection type communication protocol, and the motion image data can be transported. Hence, processing time for changeover of transport protocol process is not needed, and an image involving possibility of abnormality in monitoring object can be transported by suppressing delay.

According to the invention, the load to the network is suppressed regardless of the load state of the Internet or other network. Images necessary for judging abnormality in monitoring object can be sent out adequately. As a result, a monitor camera device suppressed in delay in transport due to processing and a monitoring system using the same can be presented.

### BRIEF DESCRIPTION OF THE DRAWINGS

Fig. 1 is a block diagram of a monitoring system including a monitor camera device in preferred embodiment 1 of the invention.
Fig. 2 is a flowchart of procedure of transporting motion image data to monitor terminal device in the monitor camera device in preferred embodiment 1 of the invention.
Fig. 3 is a flowchart of procedure of transporting motion image data and still image data to monitor terminal device in the monitor camera device in preferred embodiment 1 of the invention.
Fig. 4 is a block diagram of a monitoring system including a monitor camera device in preferred embodiment 2 of the invention.
Fig. 5 is a block diagram of an example of a monitoring system including a monitor camera device in prior art.

### DESCRIPTION OF THE REFERENCE NUMERALS

- 10, 92: Monitor camera device
- 11, 91: Imaging unit
- 12: Moving image extracting unit
- 13: Motion image encoder
- 14: Still image extracting unit
- 15: Still image encoder
- 16: Motion processing unit
- 17, 919: Change detection unit
- 19: Transport processing unit
- 20: Control unit
- 21: Network monitor unit
- 27: Alarm processing unit
- 28: Sensor
- 29: Recording and reproducing unit
- 30: Network
- 40: Monitor terminal device
- 93: Transport network
- 94: Monitoring device
- 121, 141: Resolution converting unit
- 191: UDP processing unit
- 192: TCP processing unit
- 193: Connection changeover unit
- 194: Communication unit
- 913: Moving image encoder
- 914: Still image encoder
- 915, 927: Transmission unit
- 916, 921: Reception unit
- 922: Moving image decoder
- 923: Still image decoder
- 924: Display unit
- 925: User input unit

### DETAILED DESCRIPTION OF THE PREFERRED EMBODIMENTS

Preferred embodiments of the invention are specifically described below while referring to the accompanying drawings.

### (Preferred Embodiment 1)

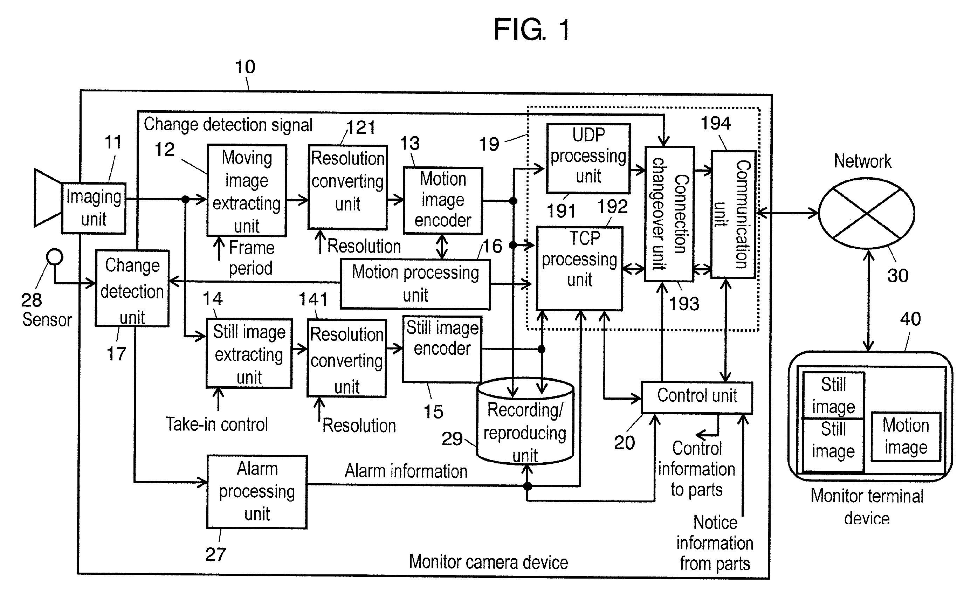

Fig. 1 is a block diagram of a monitoring system including a monitor camera device in preferred embodiment 1 of the invention. As shown in Fig. 1, this monitoring system monitors by observing the subject image taken by an imaging unit 11 of a monitor camera. The monitoring system includes a monitor camera device 10 for generating image data of the subject, a network 30 for transporting the image data of the subject taken by the monitor camera deice 10 to a remote place, and a monitor terminal device 40 connected to communicate with the monitor camera device 10 by way of the network 30. In the monitoring system, the image data for monitoring taken by the monitor camera device 10 is transported to the monitor terminal device 40 through the network 30 for communication. As a result, the observer can monitor a remote place by observing the transported image by the monitor terminal device 40. In particular, in the monitoring system of preferred embodiment 1, the monitor camera device 10 has a function of changing over adaptively changing over the protocol of communication regulation between the monitor camera device 10 and monitor terminal device 40 depending on the change of subject image or change of status of monitoring object, and transporting the image data for monitoring.

Referring now to Fig. 1, the monitoring system of preferred embodiment 1 is described particularly relating to the configuration of the monitor camera device 10, which is a feature of the invention.

In Fig. 1, a control unit 20 is responsible for controlling various processes in the monitor camera device 10, sending control information to individual parts explained below, and receiving notice information and others from these parts. The control unit 20 is composed of microcomputer and memory, and the microcomputer executes the programs stored in the memory, and processes various controls. The control unit 20 is connected so as to exchange data with the monitor terminal device 40 through the network 30. For example, when the observer sends instruction information to the monitor terminal device 40, this instruction information is noticed to the control unit 20, and the control unit 20 controls the parts according to the instruction information.

An imaging unit 11 takes the image of the subject as monitoring object, and generates image data corresponding to the taken image of the subject in every specific period. The imaging unit 11 is, for example, a video camera having an imaging element such as CCD (charge coupled device). The imaging element sends out an image signal corresponding to the taken image in a specific frame period, for example, 30 fps (frames per second). The imaging unit 11 also has an A/D converter for converting analog signal into digital signal. The image signal from the imaging element is converted into a digital signal by the A/D converter. This digital image data is sent out from the imaging unit 11 in a frame period of, for example, 30 fps. The image data from the imaging unit 11 is also supplied in a moving image extracting unit 12 and a still image extracting unit 14.

The moving image extracting unit 12 extracts image data of each frame in every specific frame period from the image data in specific frame period generated in the imaging unit 11, or converts into image data in specific frame period. For example, when image data is supplied from the imaging unit 11 in a frame period of 30 fps, the moving image extracting unit 12 extracts one frame in every two frames, and converts into image data of 15 fps, or extracts one frame in every four frames, and converts into image data of 7.5 fps. The moving image extracting unit 12 may also have a function of extract one frame in every one frame, and sending out the image data directly in 30 fps. The frame period to be extracted is noticed as frame period information from the control unit 20. The moving image extracting unit 12 converts the number of frames according to this noticed frame period information. The image data from the moving image extracting unit 12 is supplied to a resolution converting unit 121.

The resolution converting unit 121 converts the resolution of image data from the moving image extracting unit 12 in its image. The resolution converting unit 121 decimates the image data, and converts the number of pixels per frame of the supplied image data, and converts to specified resolution. For example, supposing the image data from the imaging unit 11 to have a high resolution of 4VGA (1280 x 960 pixels), the resolution converting unit 121 converts the 4VGA image data and sends out as medium resolution, VGA (640 x 480 pixels) or CIF (352 x 288 pixels), or low resolution, QCIF (176 x 144 pixels). The resolution converting unit 121 may also have a function of sending out the 4 VGA image data directly as it is. These formats 4VGA, VGA, CIF, and QCIF are names of image formats standardized for commonly specifying the digital image size. The resolution converting unit 121, in addition to these resolution converting functions, may also have a function of cutting out a specific region from the image of one frame. For example, from the 4VGA image data, image data is cut out in a quarter region in upper right portion, and issued as VGA image data. Such converting resolution, cutting position and cutting size are noticed from the control unit 20. The resolution converting unit 121 converts the resolution or cuts out the image according to such noticed information. The image data from the resolution converting unit 121 is supplied to a motion image encoder 13.

The motion image encoder 13 compresses and codes the image data supplied from the resolution converting unit 121 according to still image compressing and coding system or moving image compressing and coding system, and generates motion image data as compressed and coded image data. The compressing and coding method used in the motion image encoder 13 includes inter-frame compressing and coding method, and more specific examples are moving image compressing and coding standards such as MPEG2 system or MPEG4 system. The motion image encoder 13 compresses and codes the image data by MPEG2 system or MPEG4 system. The motion image encoder 13 may also compress and code the image data by still image compressing and coding system, that is, compresses and codes the supplied image data in frame period by intra-frame compressing and coding system of JPEG system. Such compressing and coding process in every fame period by JPEG system is called motion JPEG system. Image data is supplied in the motion image encoder 13 in periodic frame unit, and the motion image encoder 13 may be only capable of compressing and coding image data supplied in periodic frame unit. In this manner, the motion image encoder 13 generates motion image data as compressed and coded image data in the portion of periodic plural frames. The motion image encoder 13 may be also designed to change over the compressing and coding systems by the control from the control unit 20. For example, certain image data may be compressed and coded according to an inter-frame compressing and coding system, and further image data in the same frame may be compressed and coded according to an intra-frame compressing and coding system, and both may be sent to a transport processing unit 19.

The still image extracting unit 14 extracts the image data in an arbitrary frame from image data in a specific frame period generated in the imaging unit 11. The still image extracting unit 14 extracts the image data of one frame portion from the supplied image data. The still image extracting unit 14 also extracts the image data of one frame portion in response to the instruction from the control unit 20. The image data from the still image extracting unit 14 is supplied into a resolution converting unit 141.

The resolution converting unit 141 has a same function as the resolution converting unit 121. The resolution converting unit 141 converts the resolution of the image data from the still image extracting unit 14 in its image. Like the resolution converting unit 121, the resolution converting unit 141 may further have a function of issuing the supplied image data directly as it is, or a function of cutting out a certain image region from the supplied image data. The resolution to be converted, cutting position and cutting size are noticed from the control unit 20. According to the noticed information, the resolution converting unit 141 converts the resolution, and cuts out the image. The image data from the resolution converting unit 141 is supplied to the still image encoder 15.

The still image encoder 15 compresses and codes the image data supplied from the resolution converting unit 141, according to intra-frame compressing and coding system such as JPEG system or still image compressing and coding system, and generates still image data as compressed and coded image data. In the still image encoder 15, image data of one frame portion is supplied at arbitrary timing. The still image encoder 15 compresses and codes according to the supply timing of image data, and generates still image data as compressed and coded image data of one frame portion.

In this configuration, the motion image encoder 13 sends out motion image data corresponding to the image taken in every specific time interval. By restoring the motion image data, a moving image such as television picture can be reproduced. By transporting such motion image data to the monitor terminal device 40, time changes of monitoring object can be observed. On the other hand, from the still image encoder 15, still image data corresponding to the image taken at an arbitrary time is issued. For example, still image data is issued according to the instruction from the observer, and the observer can see the desired image as required.

The control unit 20 sets the resolution and frame period adequately in the resolution converting unit 121, resolution converting unit 141, and moving image extracting unit 12. Accordingly, motion image data of low resolution can be set in a monitoring object of wide range, and still image data of high resolution can be set in an area of interest by cutting out. As a result, an image easy to read is presented to the observer, and the reliability of monitoring is enhanced.

The recording and reproducing unit 29 has a recording medium, and records data in the recording medium, or reads out the recorded data. The recording and reproducing unit 29 is, for example, a hard disk drive having magnetic disk as recording medium. It may be also a memory card having semiconductor memory as recording medium. The memory card may be detachable. The recording and reproducing unit 29 records and reproduces the motion image data generated in the motion image encoder 13 or still image data generated in the still image encoder 15. Recording processing and reproducing processing of the recording and reproducing unit 29 are controlled from the control unit 20.

By the use of recording and reproducing unit 29, if abnormality in the monitoring object is overlooked, the status or process of the monitoring object can be observed later by reproducing the image data recorded in the recording and reproducing unit 29. Hence, the reliability in monitoring is enhanced.

A motion processing unit 16 processes the motion of an image taken by the imaging unit 11. When the motion image encoder 13 compresses and codes according to MPEG2 system or MPEG4 system, the motion image encoder 13 generates motion vector on the basis of these systems. This motion vector is supplied to the motion processing unit 16. By making use of this motion vector, the motion processing unit 16 generates motion information in the taken image. When the motion image encoder 13 operates on the JPEG system, the motion image encoder 13 does not generate motion vector. In this case, the motion processing unit 16 determines the frame differential portion of, for example, the image data supplied in the motion image encoder 13, and the motion information may be generated on the basis of this frame differential portion. The motion processing unit 16 may be also designed to generate the motion information on the basis of both motion vector and frame differential portion. Further, the motion processing unit 16 may have a function of generating motion information in each block of the image divided into plural blocks. The motion information generated in the motion processing unit 16 is noticed to a change detection unit 17 and a transport processing unit 19 described later.

The change detection unit 17 detects changes in the image taken by the imaging unit or changes in the status of monitoring object. The change detection unit 17 detects changes in the taken image by making use of the motion information noticed from the motion processing unit 16. For example, when a person passes before the monitor camera device 10, by passing of the person, a continuous image of a moving monitoring object is formed. Hence, the motion processing unit 16 notices the motion information showing occurrence of motion in the monitoring object to the change detection unit 17. The change detection unit 17, based on the noticed motion information, detects the change in the taken image as time changes occurring in the monitoring object. A sensor 28 is connected to the change detection unit 17 in order to detect status changes in the monitoring object. The sensor 28 is a sensing device for detecting, for example, temperature changes, detecting vibrations of monitor camera device 10, or detecting approach of a person or an animal, and is provided for detecting status changes of monitoring object. In this way, the change detection unit 17 detects changes in the monitoring image or status changes in the monitoring object, and notices such change information to an alarm processing unit 27. Further, the change detection unit 17 detects changes in the monitoring image or status changes in the monitoring object, and notices them as change detection signals to the transport processing unit 19.

The alarm processing unit 27 responds to notice of change information from the change detection unit 17, and generates alarm information including, for example, type of change, time of change, and state of monitor camera device 10 at this time. The alarm information is noticed to the recording and reproducing unit 29, and recorded in the recording and reproducing unit 29. Every time a change is detected by the change detection unit 17, the alarm processing unit 27 accumulates and records alarm information in the recording and reproducing unit 29. As a result, an alarm list is compiled by gathering alarm information in the recording and reproducing unit 29. The alarm information is also noticed to the transport processing unit 19. Corresponding to the information about change from the change detection unit 17, the still image data and motion image data may be also recorded in the recording and reproducing unit 29 together with the alarm information. In such configuration, for example, the status changes may be specifically observed later, and the monitoring effect may be further enhanced.

The transport processing unit 19 is a communication interface for communicating and connecting with the monitor terminal device 40 by way of the network 30. The transport processing unit 19 sends out image data and other various data to the monitor terminal device 40. The transport processing unit 19 receives the instruction information and other data from the monitor terminal device 40. The transport processing unit 19 sends out the motion image data generated in the motion image encoder 13, the still image data generated in the still image encoder 15, the alarm information generated in the alarm processing unit 27, and the motion information generated in the motion processing unit 16 to the monitor terminal device 40 by way of the network 30. The transport processing unit 19 is also connected to the control unit 20. Data communication between the control unit 20 and monitor terminal device 40 is executed by way of the transport processing unit 19.

As shown in Fig. 1, the transport processing unit 19 includes a UDP processing unit 191 for processing according to UDP (user datagram protocol) as protocol for transporting data, a TCP processing unit 192 for processing according to TCP (transmission control protocol) as protocol for transporting data, a communication unit 194 connected to the network 30 for data communication via network 30, and a connection changeover unit 193 for connecting the UDP processing unit 191 or TCP processing unit 192 to the communication unit 194 depending on the changeover control.

The UDP processing unit 191 forms a UDP packet adding a UDP header, and stores the supplied data in the UDP packet. Motion image data is supplied in the UDP processing unit 191 from the motion image encoder 13, and the UDP processing unit 191 encloses the motion image data into the packet according to UDP. As mentioned above, the UDP is a kind of connection-less type communication protocol proposed for communicating at high speed in the transport layer. The UDP processing unit 191 is mainly composed of transport layer of UDP, and RTP (real-time transport protocol) suited to moving image transport as protocol of higher layer.

The TCP processing unit 192 forms a TCP packet by adding TCP header, and processes to store the supplied data in this TCP packet. As mentioned above, the TCP is a kind of connection type communication protocol, and it requires establishment of connection between mutual communications in data transport or process for resend in the event of error. Accordingly, prior to data transport, the TCP processing unit 192 processes to establish connection between monitor terminal devices 40 by using the connection confirmation signal called ACK signal or NACK signal. During data transport, the TCP processing unit 192 judges the connection state with monitor terminal devices 40. If an error is judged during data transport, the data at the time of error is resent. By executing such complicated process, the TCP processing unit 192 transports the data securely to the monitor terminal device 40 if the network 30 is heavily crowded. The TCP processing unit 192 is basically composed of TCP of transport layer, and application protocol of upper layers, that is, FTP (file transfer protocol) specified as file transfer protocol, and HTTP (hyper text transfer protocol) specified for transfer of multimedia data. In the event of a change, in particular, it is preferred to use the FTP protocol for saving in the server.

As mentioned above, the TCP is capable of communicating at high reliability, and by using the TCP processing unit 192, various control information and notice information are mutually exchanged between the control unit 20 and monitor terminal device 40. The TCP processing unit 192 also receives notices of alarm information from the alarm processing unit 27 and motion information from the motion processing unit 16, and the TCP processing unit 192 is also utilized for transporting such information to the terminal monitor device 40. The TCP processing unit 192 further receives the motion image data generated in the motion image encoder 13, and the still image data generated in the still image encoder 15, and the TCP processing unit 192 is also used in transport of such image data.

The connection changeover unit 193 supplies the UDP packet generated in the UDP processing unit 191 and the TCP packet generated in the TCP processing unit 192 into the communication unit 194. The connection changeover unit 193 receives a changeover control signal from the control unit 20 and a change detection signal from the change detection unit 17 for used in such changeover process. In preferred embodiment 1 of the invention, when transporting the motion image data, the connection changeover unit 193 selectively supplies the UDP packet including motion image data from the UDP processing unit 191, and TCP packet including motion image data from the TCP processing unit 192, selectively to the communication unit 194 on the basis of the change detection signal from the change detection unit 17. The connection changeover unit 193 selects the UDP packet including motion image data from the UDP processing unit 191 when the change detection signal shows no change, and supplies this UDP packet in the communication unit 194. On the other hand, the connection changeover unit 193 and selects the TCP packet including motion image data from the TCP processing unit 192 when the change detection signal shows presence of change, and supplies the TCP packet to the communication unit 194.

Thus, the transport processing unit 19 includes the TCP processing unit 192 as processing means based on connection type communication protocol requiring establishment of connection between mutual communications, and the UDP processing unit 191 as processing means based on connection-less type communication protocol not requiring establishment of connection between mutual communications. The transport processing unit 19 changes over the processing means of transfer protocol selectively depending on the change detection signal by the connection changeover unit 193, and data is transported from the communication unit 194 according to the selected protocol. The transport processing unit 19 transports the motion image data to the monitor terminal device 40 through the network 30, based on the UDP as connection-less type communication protocol when the connection changeover unit 193 shows no change in the change detection signal. When the connection changeover unit 193 shows presence of change in the change detection signal, it transports the motion image data to the monitor terminal device 40 through the network 30, based on the TCP as connection type communication protocol.

The connection changeover unit 193 receives a changeover control signal supplied from the control unit 20. The control unit 20 , when transporting the still image data from the still image encoder 15, the alarm information from the alarm processing unit 27, and the motion information from the motion processing unit 16, connects the TCP processing unit 192 and the communication unit 194 by the connection changeover unit 193 by making use of the changeover control signal, and transports such data and information to the monitor terminal device 40 according to the TCP. The control unit 20 also makes use of this changeover control signal when communicating with the monitor terminal device 40, and connects between the TCP processing unit 192 and the communication unit 194 by the connection changeover unit 193, and thereby communicates with the monitor terminal device 40 according to the TCP.

In this way, since connection of the connection changeover unit 193 can be controlled from the control unit 20, for example, if there is any change in the change detection signal, the motion image data may be transported to the monitor terminal device 40 through the network 30 in parallel processing by the UDP as connection-less type communication protocol, and TCP as connection type communication protocol. The change detection signal can be also supplied to the control unit 20, and the control unit 20 controls according to this change detection signal, and when the change detection signal shows presence of change, both still image data and motion image data can be transported to the monitor terminal device 40 according to the TCP.

In the monitor camera device 10 in the monitoring system in preferred embodiment 1 having such configuration, as a feature of the invention, the operation is mainly explained about motion of transporting the monitoring image data by changing over the protocol adaptively.

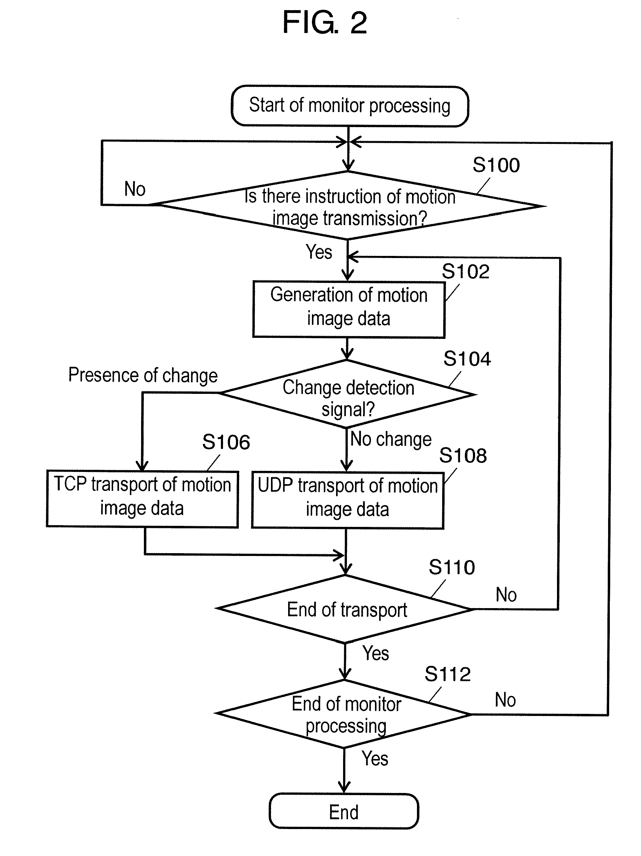

Fig. 2 is a flowchart of monitor image transport method of the invention showing the procedure of transporting motion image data to the monitor terminal device 40 in the monitor camera device 10. As basic operation of the monitor camera device 10, the transfer process of motion image data is explained below by referring to Fig. 2.

When the power source of the monitor camera device 10 is turned on and initial setting of monitor camera device 10 is over, the monitor camera device 10 starts its monitoring process. As a result, in the monitor camera device 10, the control unit 20 is ready to communicate with the monitor terminal device 40 through the network 30. The control unit 20 waits for instruction of information from the monitor terminal device 40.

In transport of motion image data, as shown in Fig. 2, the control unit 20 judges if transmission of motion image data is instructed or not. If transmission of motion image data is not instructed from the monitor terminal device 40, the control unit 20 waits for the instruction. When transmission of motion image data is instructed from the monitor terminal device 40, the control unit 20 controls to execute the process of step S102 (step S100).

When transmission of motion image data is not instructed from the monitor terminal device 40, according to the control from the control unit 20, the motion image encoder 13 compresses and codes the image data supplied from the resolution converting unit 121, and generates motion image data as compressed and coded image data (step S102). The generated motion image data is supplied to the transport processing unit 19. The transport processing unit 19 receives a change detection signal supplied from the change detection unit 17. The transport processing unit 19 forms a UDP packet in the UDP processing unit 191, and stores the supplied motion image data in the UDP packet. The TCP processing unit 192 forms a TCP packet, and the supplied motion image data is also stored in the TCP packet.

In the transport processing unit 19, the connection changeover unit 193 judges the supplied change detection signal. The connection changeover unit 193 selects the UDP packet from the UDP processing unit 191 when the change detection signal shows no change. When the change detection signal shows presence of change, the TCP packet from the TCP processing unit 192 is selected (step S104). The packet selected by the connection changeover unit 193 is supplied to the communication unit 194, and the packet including the motion image data from the communication unit 194 is transmitted to the monitor terminal device 40.

The transport processing unit 19, when the change detection signal shows no change, transports the motion image data generated in the motion image encoder 13 to the monitor terminal device 40 through the network 30 according to the UDP as connection-less type communication protocol (S108). The transport processing unit 19, when the change detection signal shows presence of change, establishes connection with the monitor terminal device 40 based on the TCP, and transports the motion image data generated in the motion image encoder 13 to the monitor terminal device 40 through the network 30 according to the TCP as connection type communication protocol (S106). The transport processing unit 19 may be also designed to establish connection with the monitor terminal device 40 based on the TCP preliminarily when starting monitoring process at the time of initial setting of the monitor camera device 10 or the like.

The control unit 20 judges if the transport process of motion image data requested from the monitor terminal device 40 is terminated or not. When the transport is terminated, the process goes to next step S112. When the transport is not terminated, the process continues from step S102 (step S110). When the transport is terminated, the control unit 20 judges if end of monitoring process is instructed or not. When end of monitoring process is instructed, the monitoring process is terminated. When end of monitoring process is not instructed, back to step S100, the control unit 20 waits for instruction of transmission of motion image data (step S112).

As explained herein, in the monitor camera device 10 of the invention, as far as there is no change in the subject image of monitoring object or in the status of monitoring object, the motion image data is transported to the monitor terminal device 40 according to the UDP as connection-less type communication protocol. Therefore, when transporting monitoring image free from abnormality or change, data is transported by protocol not particularly high in image quality, and quantity of transport data is not increased, and the load to the network is lessened.

By contrast, when there is a change in the subject image of monitoring object, the motion image data of monitoring object is transported to the monitor terminal device 40 according to the TCP as connection type communication protocol. Therefore, when transporting monitoring image having change, data is transported by protocol high in image quality not influenced by loaded state of the network, and the image having possibility of abnormality in monitoring object is not disturbed or stopping in motion in the monitor terminal device 40, and the image can be observed continuously in every specific frame period, and occurrence of abnormality in the monitoring object can be judged accurately. Only when the monitoring object is changed, the motion image data is transported by the TCP as connection type communication protocol of high quality. Hence the data transport quantity per unit time can be suppressed and the load to the network can be also suppressed.

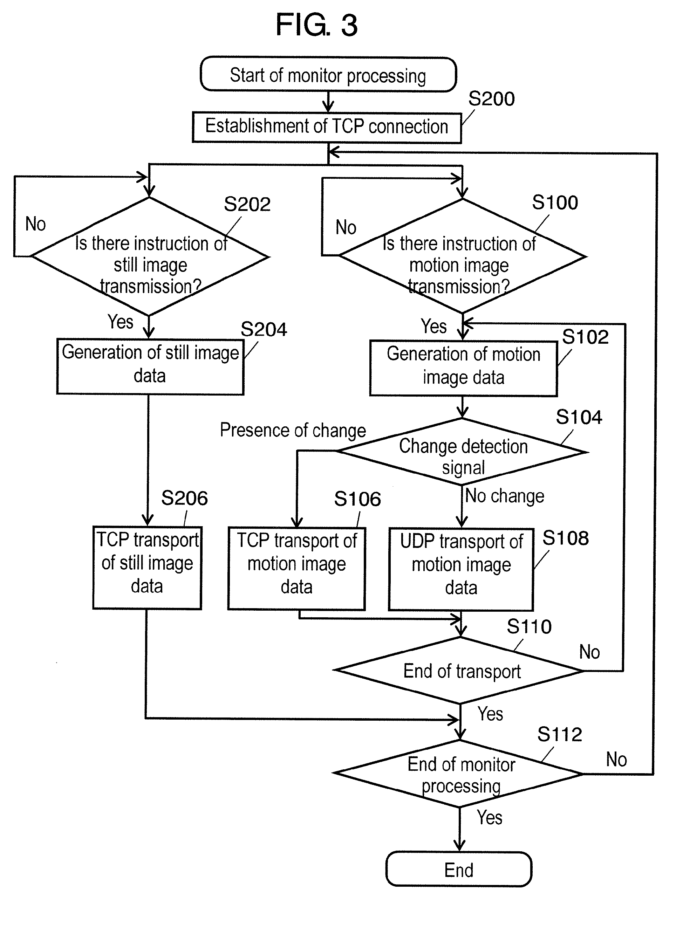

Fig. 3 is a flowchart of monitor image transport method of the invention showing the procedure of transporting motion image data and still image data to the monitor terminal device 40 in the monitor camera device 10. As the features of the monitor camera device 10, the transfer process of motion image data and still image data is explained below by referring to Fig. 3. The same steps as in Fig. 2 are identified with same reference numerals, and explanation of detail is omitted.

Same as explained in Fig. 2, when the power source of the monitor camera device 10 is turned on and initial setting of monitor camera device 10 is over, the monitor camera device 10 starts its monitoring process. As a result, in the monitor camera device 10, the control unit 20 is ready to communicate with the monitor terminal device 40 through the network 30. The control unit 20 waits for instruction of information from the monitor terminal device 40. The still image data is transported by the TCP as mentioned above. Accordingly, in the transport processing unit 19, the TCP processing unit 192 executes the process for establishing the connection with the monitor terminal 40 based on the TCP for transporting connection with the monitor terminal device 40 (step S200). If still image data transport is requested from the observer, for example, the monitor camera device 10 immediately responds to this request, and transports the still image data.

Further, as shown in Fig. 3, the monitor unit 20 judges if transmission of still image data is instructed or not. The monitor unit 20 waits for the instruction of transmission of still image data is not instructed from the monitor terminal device 40. When instruction of transmission of still image data is instructed from the monitor terminal device 40, the monitor unit 20 controls to execute the process of step S204 (step S202).

When instruction of transmission of still image data is instructed from the monitor terminal device 40, according to the control from the monitor unit 20, the still image encoder 15 compresses and codes the image data supplied from the resolution converting unit 141, and generates still image data as compressed and coded image data (step S204). The generated still image data is supplied to the transport processing unit 19.

The control unit 20 controls the transport processing unit 19 to transport the still image data. In response, the transport processing unit 19 forms a TCP packet in the TCP processing unit 192, and stores the supplied TCP image data in the TCP packet. Further, the control unit 20 controls the connection changeover unit 193 to select TCP packet from the TCP processing unit 192, and the TCP packet storing the still image data is transmitted from the communication unit 194 to the monitor terminal device 40 (step S206).

When transfer of still image data is over, the control unit 20 judges if end of monitoring process is instructed or not. When end of monitoring process is not instructed, the monitoring process is terminated. When end of monitoring process is not instructed, back to step S100, the process waits for transmission instruction of motion image data or still image data (step S112).

By thus executing the process as shown in Fig. 3, in the monitor terminal device 40, both moving image of motion image data and image of special interest by still image data can be displayed and monitored in parallel, and the precision of monitoring is enhanced. As mentioned above, the monitor camera device 10 includes a moving image extracting unit 12 capable of varying the frame period of motion image, a resolution converting unit 121 capable of varying the resolution and cutting position of motion image, and a resolution converting unit 141 capable of varying the resolution and cutting position of still image. By making use of these functions, the motion image is displayed in specific frame period of certain low resolution, and monitored as a moving image. If a change is found in the moving image, the changing position is confirmed by still image of high resolution, or the changing position is cut out, and it can be firmed by still image of high resolution, and the precision of monitoring can be enhanced. To transport the still image data, further, connection of TCP processing unit 192 and monitor terminal device 40 is established, and the TCP processing unit 192 is in operating state. Accordingly, in transport of motion image data, if a change is found in the subject image of the monitoring object, transport is immediately changed over to TCP from the UDP transport, and motion image data is transported. As a result, processing time for changeover of transport protocol is not needed, delay is suppressed, and the image having possibility of abnormality in monitoring object can be transported immediately.

### (Preferred Embodiment 2)

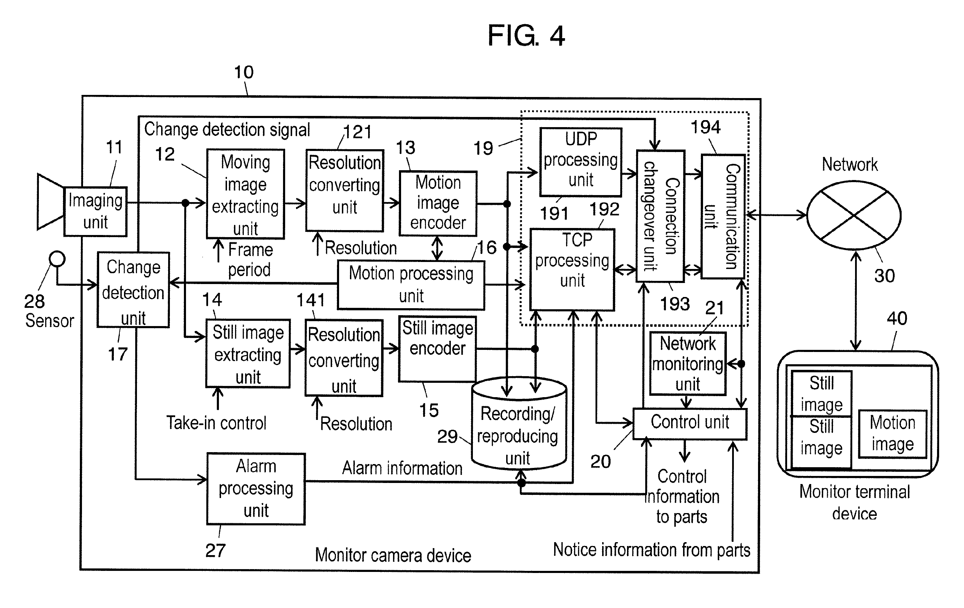

Fig. 4 is a block diagram of monitoring system including a monitor camera device in preferred embodiment 2 of the invention.

In preferred embodiment 2, same as in preferred embodiment 1, this monitoring system monitors by making use of the subject image taken by the imaging unit 11 of the monitoring camera. The monitoring system includes a monitor camera device 10 for generating image data of the subject, a network 30 for transporting the image data of the subject taken by the monitor camera deice 10 to a remote place, and a monitor terminal device 40 connected to communicate with the monitor camera device 10 by way of the network 30. The image data for monitoring taken by the monitor camera device 10 is transported to the monitor terminal device 40 through the network 30 for communication. Same parts as in Fig. 1 are identified with same reference numerals, and their explanation is omitted. The monitor camera device 10 shown in Fig. 4 further has a network monitoring unit 21 connected to a communication unit 194, and is designed to transport the motion image data by changing over the protocol adaptively also depending on the crowded state of the network 30, in addition to the change in the monitoring object by change detection signal, in the protocol for transporting the motion image data.

In Fig. 4, the network monitoring unit 21 is connected to the communication unit 194, and monitors the transport load state depending on the status of the network 30, and notices the network information based on monitoring to the control unit 20. The network monitoring unit 21 receives a specified capacity of data periodically from the monitor terminal device 40, and measures the transport load state of the network based on the reception state, that is, the crowded state, and generates network information based on the measurement.

The control unit 20 controls the compressing and coding system of the motion image encoder 13 on the basis of the network information. The control unit 20 selects the still image compressing and coding system as intra-frame compressing and coding system such as JPEG system when the network 30 shows a light load state, and supplies the motion image data generated according to the still image compressing and coding system to the transport processing unit 19. When the network 30 shows an overloaded state, it selects the moving image compressing and coding system as inter-frame compressing and coding system such as MPEG4 system, and supplies the motion image data generated according to the moving image compressing and coding system to the transport processing unit 19.

In such configuration, motion image data of large transport data quantity can be transported depending on the situation of the network 30. For example, when the network 30 is overloaded, by transporting the motion image data by still image compressing and coding system by MPEG4 system or the like, the load on the network 30 by transport of motion image data can be suppressed.

When the network 30 is overloaded, motion image data is transported by moving image compressing and coding method by JPEG system or the like. As a result, while motion image data is being transported by the UDP, effects of packet loss by overloaded state of network 30 can be suppressed. In particular, when the data is discarded by inter-frame compressing and coding method such as MPEG4 system, the image is frozen up to next I frame, for example, and disturbance of motion image by control can be suppressed.

### INDUSTRIAL APPLICABILITY

By using the monitor camera device and monitoring system of the invention, load to the network can be suppressed regardless of the effects of load state of the Internet or network. Besides, images necessary for judging abnormality in monitoring object can be sent out adequately, and it is very useful as monitoring imaging device and monitoring system using the same.

## Claims

1. A monitor camera device of a monitoring system for monitoring a remote place by transporting image data for monitoring taken by a monitor camera device to a monitor terminal device through a network of communication network, comprising:
an imaging unit for taking the image of a subject as the object of monitoring, and generating the image data of the taken subject in a specific frame period, a moving image extracting unit for extracting image data of each frame in every specific frame period from the image data of specific frame period generated in the imaging unit,
a motion image encoder for generating motion image data as compressed and coded image data by compressing and coding the image data extracted in the moving image extracting unit, according to still image compressing and coding system, or moving image compressing and coding system,
a change detecting unit for detecting a change in the subject on the basis of the image data, and issuing the detected result as a change detection signal, and
a transport processing unit for processing data transport by changing over the processing means of transport protocol selectively depending on the change detection signal, for transporting the data to a monitor terminal device through a network, between processing means based on connection type communication protocol requiring establishment of connection between mutual communications and processing means based on connection-less type communication protocol not requiring establishment of connection between mutual communications,
wherein the transport processing unit transports the motion image data generated in the motion image encoder, when the change detection data shows no change, to the monitor terminal device through the network according to connection-less type communication protocol, and
transports the motion image data generated in the motion image encoder, when the change detection data shows presence of change, to the monitor terminal device through the network according to connection type communication protocol.

2. The monitor camera device of claim 1,
wherein the transport processing unit transports the motion image data generated in the motion image encoder, when the change detection data shows no change, to the monitor terminal device through the network according to connection-less type communication protocol, and
transports the motion image data generated in the motion image encoder, when the change detection data shows presence of change, to the monitor terminal device through the network in parallel according to connection-less type communication protocol and connection type communication protocol.

3. The monitor camera device of claim 1 or 2, further comprising:
a still image extracting unit for extracting image data in an arbitrary frame from the image data in specific frame period generated in the imaging unit, and
a still image encoder for compressing and coding the image data extracted in the still image extracting unit according to still image compressing and
coding system, and generating still image data as compressed and coded image data,
wherein the transport processing unit transports the still image data generated in the still image encoder to the monitor network device through the network according to connection type protocol, and
transports the motion image data generated in the motion image encoder to the monitor network device through the network according to connection-less type protocol when the change detection data shows no change, or
transports the motion image data generated in the motion image encoder to the monitor terminal device through the network according to connection type communication protocol when the change detection data shows presence of change.

4. The monitor camera device of claim 3,
wherein the transport processing unit transports the motion image data generated in the motion image encoder, when the change detection data shows no change, to the monitor terminal device through the network according to connection-less type communication protocol, and
transports the still image data generated in the still image encoder, when the change detection data shows presence of change, to the monitor terminal device through the network according to connection type communication protocol, and transports the motion image data generated in the motion image encoder to the monitor terminal device through the network according to connection type communication protocol.

5. The monitor camera device of claim 3,
wherein the image by the still image data generated in the still image encoder is higher in resolution than the image by the motion image data generated in the motion image encoder.

6. The monitor camera device of claim 3,
wherein the still image extracting unit extracts an image corresponding to one block out of image of plural blocks of the image of the image data from the imaging unit divided into plural blocks.

7. The monitor camera device of claim 6,
wherein the change detection unit detects the change in each block of the image by the image data divided into plural blocks, notices the change detection signal showing presence of change when the changed blocks exceed a specified rate to the transport processing unit, and notices the information of the block of the largest change to the still image extracting unit, and
the still image extracting unit extracts the image of the block of the largest change, depending on the information of the block of the largest change from the change detection unit.

8. The monitor camera device of claim 1 or 2, further comprising:
a network monitoring unit for monitoring the transport load state depending on the status of the network, and noticing the network information based on monitoring to the motion image encoder,
wherein the motion image encoder selects the moving image compressing and coding system or the still image compressing and coding system depending on the network information from the network monitoring unit, and supplies the motion image data generated in the selected compressing and coding system to the transport processing unit.

9. The monitor camera device of claim 1 or 2,
wherein the change detection unit detects the change in the subject based on the motion information showing the motion of the image data corresponding to the image taken by the imaging unit.

10. The monitor camera device of claim 9,
wherein the motion information is the motion vector generated in the moving image compressing and coding system in the motion image encoder.

11. The monitor camera device of claim 9,
wherein the motion information is the information generated according to the frame differential value of image data corresponding to the image taken by the imaging unit.

12. The monitor camera device of claim 9,
wherein the change detection unit detects the change in the subject based on the sensing signal supplied from the sensor provided outside together with the motion information.

13. The monitor camera device of claim 12, further comprising:
a recording and reproducing unit for recording data into a recording medium, and reading out the recorded data,
wherein the recording and reproducing unit records at least one image data of still image data and motion image data, depending on the change detection signal.

14. The monitor camera device of claim 13, further comprising:
an alarm processing unit for editing the information about the change detected in the change detection unit as alarm information,
wherein the recording and reproducing unit records the alarm information, together with the image data, depending on the change detection signal.

15. The monitor camera device of claim 1 or 2,
wherein the connection-less type communication protocol is the UDP, one of the protocols not requiring establishment of connection between mutual communications in data transport, and
the connection type communication protocol is the TCP, one of the protocols requiring establishment of connection between mutual communications in data transport.

16. The monitor camera device of claim 1 or 2,
wherein the still image compressing and coding system is the intra-frame compressing and coding system of compressing and coding by using image data in one frame, and the moving image compressing and coding system is the inter-frame compressing and coding system of compressing and coding by using image data in one frame, and compressing and coding image data between adjacent frames.

17. The monitor camera device of claim 16,
wherein the still image compressing and coding system is a system conforming to the image coding standard of JPEG system, and the moving image compressing and coding system is a system conforming to the image coding standard of MPEG4 system.

18. A monitoring system comprising a monitor camera device for generating image data for monitoring, a network as communication network for transporting the image for monitoring, and a monitor terminal device for receiving and reproducing the image data for monitoring transported through the network,
wherein the monitor camera device comprises:
an imaging unit for taking the image of a subject as the object of monitoring, and generating the image data of the taken subject in a specific frame period, a moving image extracting unit for extracting image data of each frame in every specific frame period from the image data of specific frame period generated in the imaging unit,
a motion image encoder for generating motion image data as compressed and coded mage data by compressing and coding the image data extracted in the moving image extracting unit, according to still image compressing and coding system, or moving image compressing and coding system,
a change detecting unit for detecting a change in the subject on the basis of the image data, and issuing the detected result as a change detection signal, and
a transport processing unit for processing data transport by changing over the processing means of transport protocol selectively depending on the change detection signal, for transporting the data to a monitor terminal device through a network, between processing means based on connection type communication protocol requiring establishment of connection between mutual communications and processing means based on connection-less type communication protocol not requiring establishment of connection between mutual communications,
wherein the transport processing unit transports the motion image data generated in the motion image encoder, when the change detection data shows no change, to the monitor terminal device through the network according to connection-less type communication protocol, and
transports the motion image data generated in the motion image encoder, when the change detection data shows presence of change, to the monitor terminal device through the network according to connection type communication protocol.

19. A monitoring image transport method of a monitoring system for monitoring a remote place by transporting image data for monitoring taken by a monitor camera device to a monitor terminal device through a network of communication network, comprising:
a step of taking the image of a subject as the object of monitoring, and extracting image data of each frame in every specific frame period from the image data of specific frame period of an imaging unit for generating image data of the taken subject image in specific frame period,
a step of generating motion image data as compressed and coded image data by compressing and coding the image data extracted in the moving image extracting unit, according to still image compressing and coding system, or moving image compressing and coding system,
a step of detecting a change in the subject on the basis of the image data, and issuing the detected result as a change detection signal, and
a step of processing data transport by changing over the transport protocol selectively depending on the change detection signal, for transporting the data to a monitor terminal device through a network, between process based on connection type communication protocol requiring establishment of connection between mutual communications and process based on connection-less type communication protocol not requiring establishment of connection between mutual communications,
wherein the data transport processing step transports the motion image data generated in the motion image encoder, when the change detection data shows no change, to the monitor terminal device through the network according to connection-less type communication protocol, and
transports the motion image data generated in the motion image encoder, when the change detection data shows presence of change, to the monitor terminal device through the network according to connection type communication protocol.
